# EUROPEAN PATENT APPLICATION

(11) **EP 1 555 823 A1**
(43) Date of publication of application: **20.07.2005**
(21) Application number: 03754115.8
(22) Date of filing: 15.10.2003
(51) Int. Cl.: H04N 7/173

(54) **DIGITAL ITEM APPLICATION SYSTEM VIA URL**

(30) Priority: 15.10.2002 JP 2002300318
(71) Applicant: MATSUSHITA ELECTRIC INDUSTRIAL CO., LTD., Kadoma-shi, Osaka 571-8501 (JP)
(72) Inventor: Shen, Sheng Mei, 689093 Singapore (SG); Huang, Zhongyang, 680608 Singapore (SG); Ji, Ming, 389758 Singapore (SG); Ueno, Takafumi, Nara-shi, Nara 631-0001 (JP)
(74) Representative: Eisenführ, Speiser & Partner
(86) International application number: PCT/JP2003/013154
(87) International publication number: WO 2004/036913

(57) **Abstract**

A data distribution system that distributes data adapting to a second terminal from a first terminal having data to the second terminal. The first terminal includes a data recording means that records data of a plurality of formats, a data distribution request receiving means that receives a distribution request of data adapting to the second terminal and that receives a URL related to the information of the second terminal, a terminal information acquiring means that acquires the information of the second terminal from the URL, a data selecting means that selects data adapting to the second terminal on the basis of the acquired information of the second terminal, and a data transmitting means that transmits the selected data to the second terminal. The second terminal includes a terminal information describing means that describes the information of the second terminal in tree structure, a URL recording means that transmits the information of the second terminal described in tree structure to a predetermined URL to record the information, a data distribution request means that requests the first terminal to distribute data adapting to the second terminal and that notifies the first terminal of the URL, and a data receiving means that receives the data from the first terminal.

## Description

### TECHNICAL FIELD

The present invention relates to digital item adaptation (DIA) when the capabilities of a terminal are fully understood and interpreted by a server, a gateway, or another peer. The present invention also relates to digital item adaptation which allows a well described terminal to access multimedia contents of different formats.

### BACKGROUND ART

A large number of standards about video, audio, systems, communication protocols, contents descriptions, contents packaging, and the like have been formed by MPEG and other standard-setting organizations.

As a result, as existing contents, contents formed by different formats obtained by different source coding methods such as MPEG1, MPEG2, MPEG4, DV, DVCPRO, RTP, MP4, QuickTime, AVi, and ASF are known. At the same time, devices and terminals are constructed by different references in conformity to predetermined but different standards. For example, the existing DTV STB (set top box) can decode and play back MPEG2 system having MPEG2 contents. However, audio coding is different from video coding, and packaging formats of the contents are different from each other, so that DV or MPEG4 contents cannot be played back.

The format of contents can be easily converted from a certain format including a system format and an AV sourcing coding format to another format, and a service provider can also provide contents in different formats. However, only a terminal supports one or several formats.

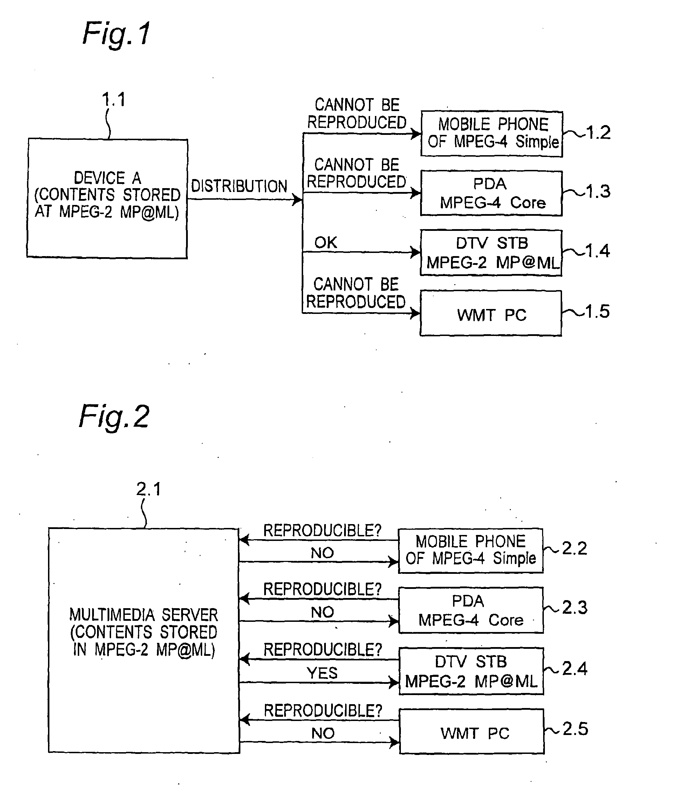

In order to describe the actual state in which contents in a specific data format cannot be played back by different terminals, conventional arts are shown in Figs. 1 and 2.

As shown in Fig. 1, Device A of module 1.1 provides MPEG-2 MP@ML contents to a user, and the MPEG-2 MP@ML contents can be played back by only a terminal of DTV STB of module 1.4. The contents cannot be played back by terminals of other modules 1.2, 1.3, and 1.5.

As shown in Fig. 2, Multimedia server of module 2.1 provides MPEG-2 MP@ML contents to a user in an interactive two-way, the MPEG-2 MP@ML contents can be played back by only DTV STB of module 2.4. The contents cannot be played back by terminals of other modules 2.2, 2.3, and 2.5.

As is apparent from the examples, in the actual state, access to contents by terminals or networks in a wide area is restricted.

On the other hand, it is impossible to construct a terminal that can decode all different formats of contents because costs are excessively high.

The present invention focuses on defining terminal description having systematic structure and, more particularly, focuses on defining sub-elements such as system format and communication protocol.

### DISCLOSURE OF INVENTION

The present invention has as its object to solve the following problems.

A first problem allows the same contents to be accessed, picked, and acquired from any well described terminal.

A second problem allows a terminal to access any contents of different data formats, to pick the contents, and to acquire the contents.

It is desired to well describe a terminal such that like a storage medium and an audio/video output supporting format, capabilities such as an AV coding format and system supporting format are reflected. Therefore, contents can be provided to a terminal in an appropriate format by negotiation.

A data distribution system according to the present invention is a system that distributes data adapting to a second terminal from a first terminal having data to the second terminal. This system includes the first terminal having data and the second terminal to which the data is distributed.

The first terminal includes:
a data recording means that records data of a plurality of formats;
a data distribution request receiving means that receives a distribution request of data adapting to the second terminal and that receives a Uniform Resource Locator (URL) at which information of the second terminal is recorded from the second terminal;
a terminal information acquiring means that acquires the information of the second terminal from the URL;
a data selecting means that selects data adapting to the second terminal on the basis of the acquired information of the second terminal; and
a data transmitting means that transmits the selected data to the second terminal.

The second terminal includes:
a terminal information describing means that describes the information of the second terminal in tree structure;
a URL recording means that transmits the information of the second terminal described in tree structure to a predetermined URL to record the information at the URL;
a data distribution request means that requests the first terminal to distribute data adapting to the second terminal and that notifies the first terminal of the URL; and
a data receiving means that receives the data from the first terminal.

The description of tree structure is defined with respect to a terminal, so that the capabilities of the terminal can be defined while reflecting the AV and system coding capabilities, the AV input/output capability, the storage and I/O capabilities, the text markup language supporting, the communication protocol, the download capability, and the like of the terminal.

The description of tree structure is defined with respect to a terminal, so that the terminal can define the capabilities while reflecting the process output, the memory, the operating system, and the like of the terminal. The description can be referred to when a predetermined software is downloaded on the terminal.

Tree structure for a terminal having a hierarchical structure is defined, so that a multimedia framework can easily and effectively process negotiation of terminal capabilities related to several branches selected from the tree structure.

The description of tree structure of a terminal having a systematic structure is defined to make it easy and simple to bury branches of the tree corresponding to different categories with respect to the terminal capabilities.

The terminal can be well described by a tree structure.

In the first layer, DeviceProperty, Codec, InputOuput are described.

In the second layer:
1) below DeviceProperty, GeneralProperty (CPU, OS (operating system), Memory, Power, VM), DatalO (Serial, Parallel, USB, InfraRed, BlueTooth, Wireless802), Storage (MMC (MultiMedia Card), SD(Secure Disk), MS(Memory Stick), HD(Hard Disk), DVD-RAM, CD-RW, Floppy (registered trademark), Zip Disk), SupportingTool (Global Positioning System: GPS), Browser, IPMPTool, RELTool, and the like) are described.
2) Below Codec, AVDecoding (Audio, Video), AVEncoding (Audio, Video), ImageFormat, TextFormat, SystemFormat (MPEG-2TS, MPEG-2PS, MPEG-4, MP4, ASF, Avi, QuickTime, RTP, H.323, and the like) are described.
3) Below InputOutput, AudiolnOut (Speaker, Mic), VideolnOut (Display, CCD), TextInOut (Screen, PointingDevice, KeyPad, Keyboard) are described.

A terminal description of tree structure is stored at a URL. Depending on a negotiation message, a URL can be carried in place of any one of all the branches and sub-branches of an actual terminal description to execute digital item adaptation, and a transmission band width can be saved.

### Effect of the Invention

A terminal having a well-described structured DIA description can access, pick, and consume the contents of different formats, and can use another application to extend the usability of the contents.

A multimedia framework can use the terminal description having the tree structure to negotiate with the terminal before contents are distributed to the terminal to achieve adaptation by the capabilities of the terminal.

A server or a gateway constructed by the DIA description of a defined structure can select adaptation tools to convert content from one format to another, to match with the required format by a terminal. As a result, services can be achieved with respect to various terminals to extend business scale.

### BRIEF DESCRIPTION OF THE DRAWINGS

Various objects, characteristics, and advantages of the present invention will be apparent from preferable embodiments which will be described later with reference to the accompanying drawings.
Fig. 1 is a diagram of conventional art 1 which provides contents to a user having terminals of different types in one direction.
Fig. 2 is a diagram of conventional art 2 which bidirectionally provides contents to a user having terminals of different types.
Fig. 3 is a diagram of the Schema and Syntax related to a top level structure in a terminal description.
Fig. 4 is a diagram of the Schema and Syntax related to DeviceProperty in the terminal description.
Fig. 5 is a diagram of the Schema and Syntax related to Codec in the terminal description.
Fig. 6 is a diagram of the Schema and Syntax related to InputOutput in the terminal description.
Fig. 7 is a diagram of the Schema and Syntax related to AVDecoding in the terminal description.
Fig. 8 is a diagram of the Schema and Syntax related to SystemFormat in the terminal description.
Fig. 9 is a schematic diagram of a data distribution system according to an embodiment of the present invention.
Fig. 10 is a flow chart of a data request method in a second terminal in the data distribution system according to the embodiment of the present invention.
Fig. 11 is a flow chart of a data distribution method in a first terminal in the data distribution system according to the embodiment of the present invention.
Fig. 12 is a flow chart of the details of a process of selecting data adaptive to the second terminal on the basis of information acquired in the data distribution system according to the embodiment of the present invention.

### BEST MODE FOR CARRYING OUT THE INVENTION

Embodiments of the present invention will be described below with reference to the accompanying drawings. The same reference numerals as in the drawings denote the same constituent elements or element having the same functions and the same operations in the drawings.

A constructed terminal will be described below with reference to information of a terminal described in tree structure. As the information of the terminal, pieces of information related to basic characteristics of the terminal, the AV coding capability of the terminal, input/output of the terminal, and the like are used. These pieces of information are hierarchized and described as branch information.

### Layer structure of terminal capability definition

### Layer 1

### Layer structure

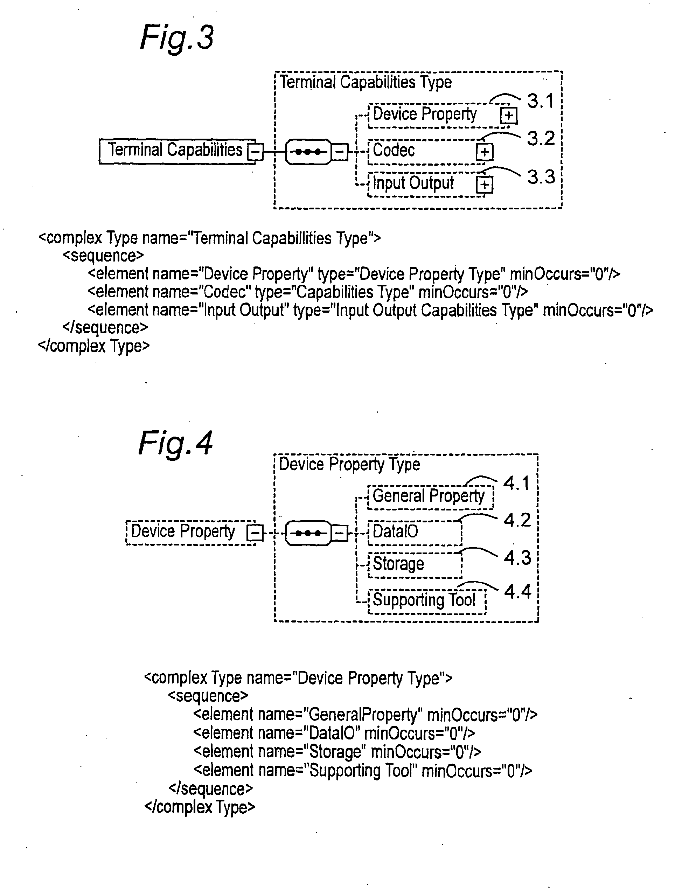

Layer 1 is top-level, as shown in Fig. 3 to show an outline of Layer 1, is constituted by three groups: DeviceProperty 3.1; Codec 3.2; and InputOutput 3.3.

Element names and their Semantics for Layer 1 are defined in Table 1.

**Table 1**

| | Name | Definition |
|---|---|---|
| Terminal Capability | Device Property | Describe terminal's basic property, DataIO, Storage, and basic Supporting Tool |
| | Codec | Describe terminal's AV Coding capability, System Format Supporting |
| | Input Output | Describe terminal's Multimedia input and output |
| | Extension | for future classes of extensions to capabilities |

### Layer 2

Layer 2 is to further describe the elements in the Layer 1 groups.

### Descriptions of elements below Terminal DeviceProperty

As shown in Fig. 4 as an outline, this layer includes GeneralProperty 4.1, DatalO 4.2, Storage 4.3, and SupportingTool 4.4.

### Layer Structure

Element names and their Semantics are defined in Table 2.

**Table 2**

| Name of Upper Layer | Name | Definition |
|---|---|---|
| DeviceProperty | GeneralProperty | Describe CPU, OS, Memory, Power VM (virtual memory) |
| | Data IO | Describe Data I/O such as infrared, USB, BlueTooth, Serial, Parallel, and Wireless802 |
| | Storage | Describe storage format Supporting such as MMC, SD, MS, HD, DVD, VCD, Zip, and Floppy |
| | SupportingTool | Describe terminal supporting tools such as GPS, Browser, IPMPTool, RELTool, and MetadataTool |
| | Extension | for future classes of extension to capability |

### Descriptions of elements below Terminal Codec:

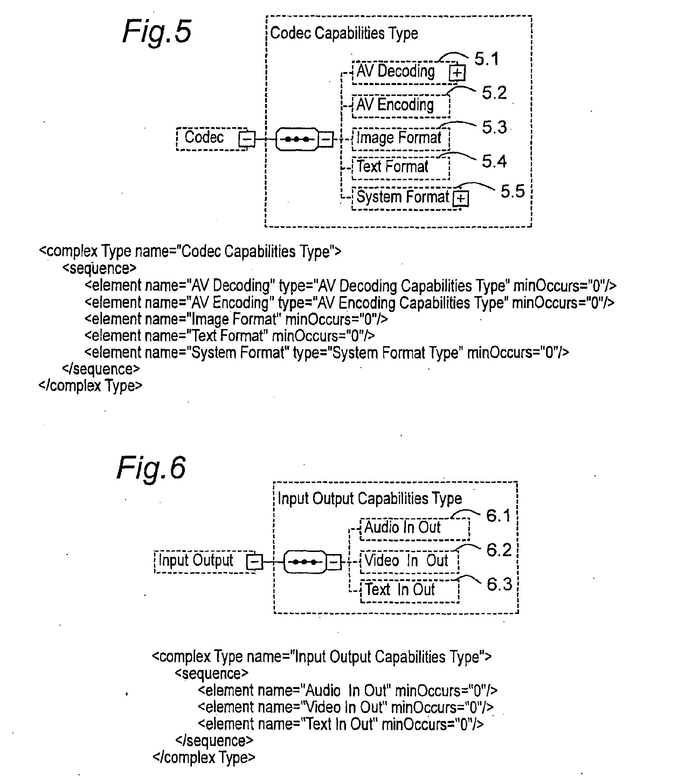

As shown in Fig. 5 as an outline, the branches include AVDecoding 5.1, AVEncoding 5.2, ImageFormat 5.3, TextFormat 5.4, and SystemFormat5.5.

### Layer structure

Elements and their Semantics are defined in Table 3.

**Table 3**

| Upper Layer Name | Name | Definition |
|---|---|---|
| Codec | AVDecoding | Describe Audio and Video decoding format supporting |
| | AVEncoding | Describe Audio and Video encoding format supporting |
| | lmageFormat | Describe Image coding format supporting |
| | TextFormat | Describe Text format supporting |
| | SystemFormat | Describe system format supporting |
| | Extension | for future classes of extension to capability |

### Descriptions of elements below Terminal InputOutput

As shown in Fig. 6 as an outline, the branches include AudioInputOutput 6.1, VideoInputOutput 6.2, and TextInputOutput 6.3.

### Layer structure

Elements and their Semantics are defined in Table 4.

**Table 4**

| Upper Layer Name | Name | Definition |
|---|---|---|
| InputOutput | AudioInOut | Describe Audio input/output capability like loudspeaker, microphones |
| | VideolnOut | Describe Video input/output capability like display, CCD camera |
| | TextInOut | Describe Text input/output capability like screen, pointing, KeyPad, Keyboard, mouse |
| | Extension | for future classes of extensions to capability |

Details related to other DeviceProperty, InputOutput, and the like are not explained and described. However, a detailed explanation related to Codec will be performed in the next section.

### Description for Codec Element:

The Codec element is constituted by AVDecoding, AVEncoding, lmageFormat, TextFormat, and SystemFormat.

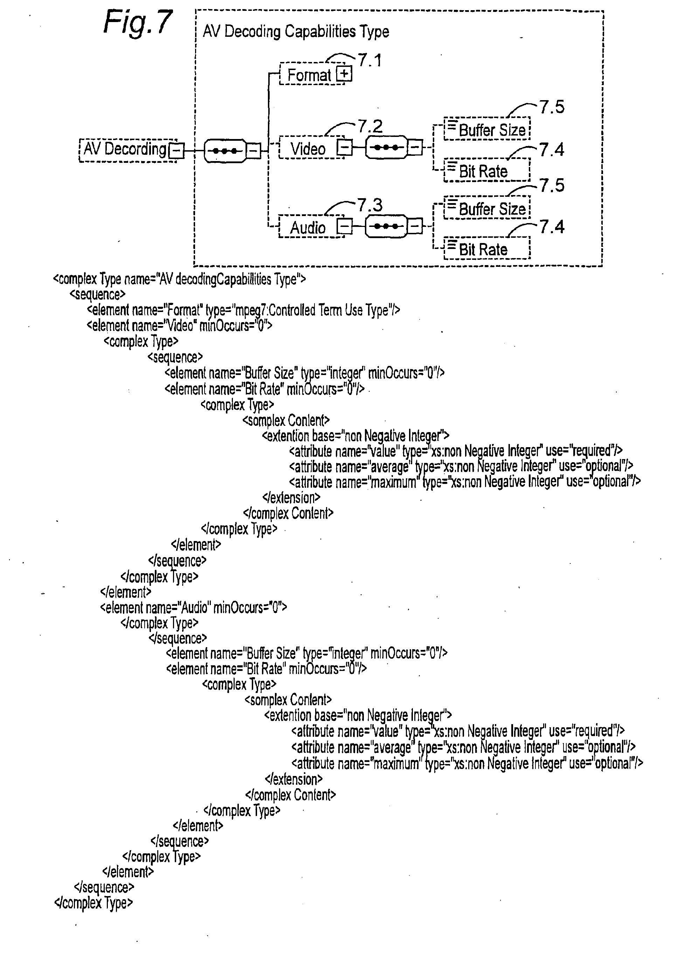

Fig. 7 shows an outline of AVDecoding and sub-elements thereof. Element names and their Semantics are defined in Table 5.

**Table 5**

| Name | Definition |
|---|---|
| AVDecoding | Tools for describing the decoding capability of terminal. |
| Format (7.1) | Describes video/audio coding format |
| Video (7.2) | Describe decoding capability specific to video |
| Audio (7.3) | Describe decoding capability specific to audio |
| BitRateAudio (7.4) BitRateVideo (7.4) | Indicates the nominal bit rate in bit/s. |
| BufferSize (7.5) | indicate the buffer size for Video/Audio coding; for example, in AVC coding, it is highly preferred for a Hypothetical Reference Decoder (HRD) model to obtain the allocated video Buffer Size in a video decoder for better video streaming performance. The video/audio BufferSize is not the equal to buffer size matched to the profile and level of the MPEG standards. |
| Extension | for future classes of extension to capabilities |
| Three attributes exist under "BitRate" element of audio/video | |
| Value | Indicates the normal numerical value for the BitRate in case of constant bit rate (required) |
| Maximum | Indicates the maximum numerical value for the BitRate in case of variable bit rate (optional) |
| Average | Indicates the average numerical value for the BitRate in the case of variable bit rate (optional) |

As an audio codec, MPEG-1, Layer3 (MP3), MPEG2, Layer2, MPEG4 AAC, dolby AC3, or the like can be used. As a video codec, MPEG1, an MPEG2 main profile, an MPEG4 simple profile, MPEG4 AVC, WM9 (Windows Media 9), RealVideo, or the like can be used.

### Descriptions of AVEncoding

This AVEncoding is identical with AVDecoding shown in Fig.7 and Table 5.

### Description of lmageFormat:

This is to describe an image format such as JPEG, JPEG2000, Gif, Taga, BitMap, PNG, or TIFF supported by a terminal.

### Descriptions of TextFormat

This is to describe a text format such as ASCII, Shift-JIS, HTML, XML, or SMIL supported by a terminal.

### Descriptions of SystemFormat:

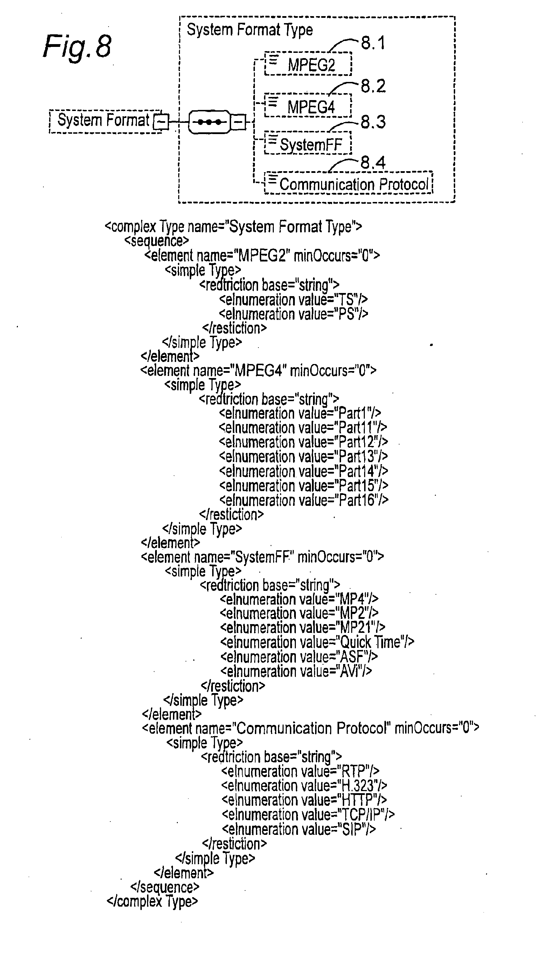

Fig. 8 shows a concept of SystemFormat and sub-elements of SystemFormat.

Element names and their Semantics are shown in Table 6.

**Table 6**

| Name | | Definition |
|---|---|---|
| SystemFormat | | Tools for describing system format supporting of a terminal |
| MPEG2 (8.1) | TS | Describes MPEG2 Transport Multi/de-multiplex supporting |
| | PS | Describes MPEG2 Program Multi/de-multiplex supporting |
| MPEG4 (8.2) | Part 1 | Describes MPEG4 system format supporting based on the basis of MPEG4 Part 1 |
| | Part 11 | Describes MPEG4 system format supporting based on the basis of MPEG4 Part 11 |
| | Part 12 | Describes MPEG4 system format supporting based on the basis of MPEG4 Part 12 |
| | Part 13 | Describes MPEG4 system format supporting based on the basis of MPEG4 Part 13. |
| | Part 14 | Describes MPEG4 system format supporting based on the basis of MPEG4 Part 14. |
| | Part 15 | Describes MPEG4 system format supporting based on the basis of MPEG4 Part 15 |
| | Part 16 | Describes MPEG4 system format supporting based on the basis of MPEG4 Part 16 |
| SystemFF | MP4 | Describes MP4 file format supporting |
| (8.3) | Quick Time | Describes QuickTime format supporting |
| | ASF | Describes ASF file format supporting |
| | MP2 | Describes MP2 format supporting |
| | MP21 | Describes MP21 format supporting |
| | Avi | Describes AVi format supporting |
| Communication | RTP | Describes RTP protocol supporting |
| Protocol | H.323 | Describes H.323 protocol supporting |
| (8.4) | HTTP | Describes HTTP protocol supporting |
| | TCP/IP | Describes TCP/IP protocol supporting |
| | SIP | Describes SIP protocol supporting |
| Extension | | for future classes of extensions to capabilities |

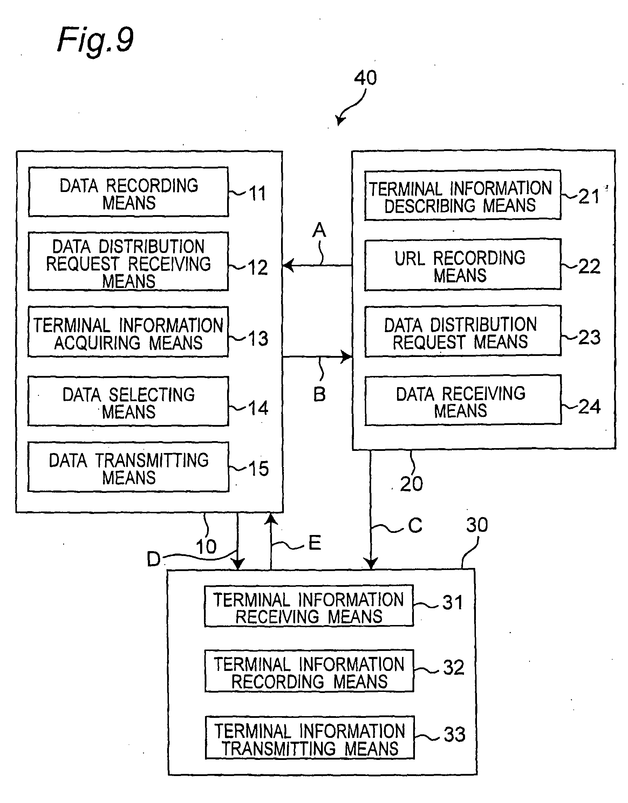

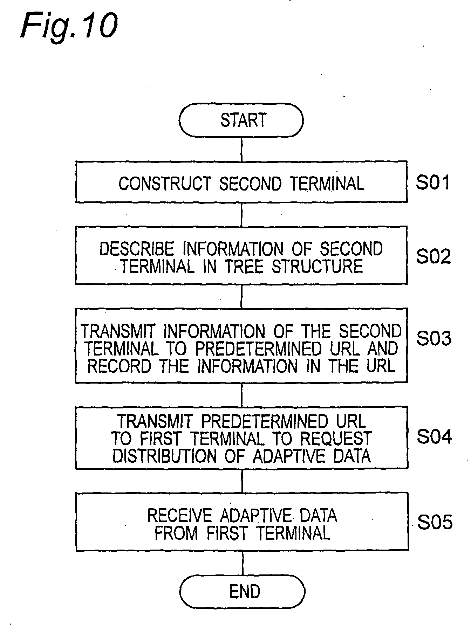

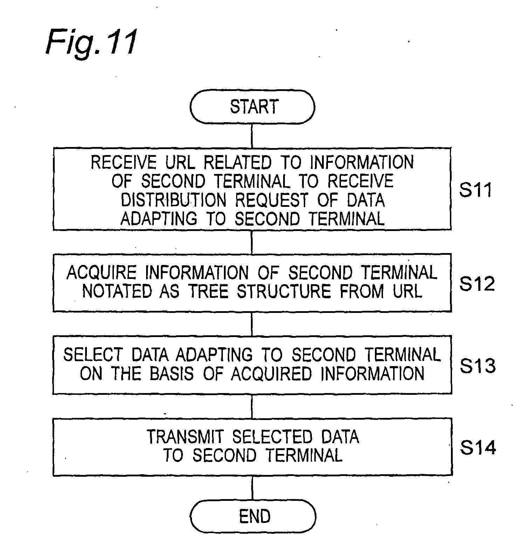

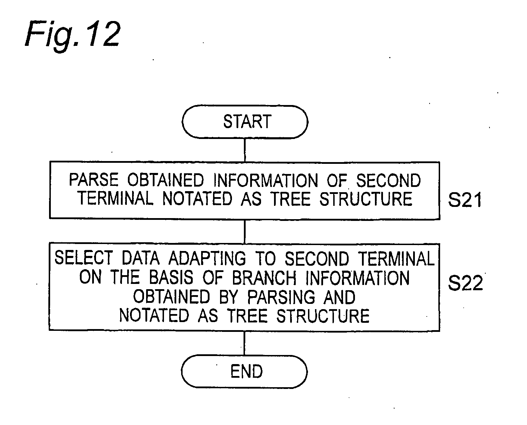

A data distribution system, i.e., a digital item adaptation system according to the embodiment of the present invention will be described below with reference to Figs. 9 to 12. Fig. 9 is a schematic diagram of the data distribution system. Fig. 10 is a flow chart of a data request method in a second terminal. Fig. 11 is a flow chart of the data distribution system in a first terminal. Fig. 12 is a flow chart of the details of a process of selecting data adapting to the second terminal on the basis of acquired information.

The data distribution system according to the embodiment of the present invention is a system that distributes adaptive data from a first terminal 10 having data to a second terminal 20.

The first terminal 10 includes:
a data recording means 11 that records data of a plurality of formats;
a data distribution request receiving means 12 that receives a URL related to information of the second terminal from the second terminal and that receives a distribution request of data adapting to the second terminal;
a terminal information acquiring means 13 that acquires the information of the second terminal from the URL;
a data selecting means 14 that selects the data adapting to the second terminal on the basis of the acquired information of the second terminal; and
a data transmitting means 15 that transmits the selected data to the second terminal.

The second terminal 20 includes:
a terminal information describing means 21 that describes information of the second terminal in tree structure;
a URL recording means 22 that transmits the information of the second terminal described in tree structure to a predetermined URL and that records the information;
a data distribution request means 23 that notifies the fist terminal of a URL related to the information of the second terminal and that requests the first terminal to distribute data adapting to the second terminal; and
a data receiving means 24 that receives the data from the first terminal.

In this data distribution system 30, a data distribution request is sent from the second terminal to the first terminal, i.e., negotiation is performed, and data is distributed from the first terminal to the second terminal. In this case, a data distribution request method in the second terminal will be described below. The data distribution request method in the second terminal, as shown in Fig. 10, includes steps (a) to (e):
(a) Constructing the second terminal (S01). The details of the step of constructing the second terminal will be described later.
(b) Describing information of the second terminal in tree structure (S02). In this case, the information of the second terminal includes pieces of information related to the basic characteristics of the constructed second terminal, the AV coding capabilities of the second terminal, and multimedia input/output of the second terminal. These pieces of information are branched as branch information and described in tree structure. The pieces of information are described in tree structure, so that necessary information can be easily extracted from a large number of pieces of information related to the second terminal. Data selection in the first terminal can be easily performed. As the tree structure description, as shown in Figs. 3 to 8, the pieces of information can be described by using XML. The pieces of branch information are defined as an upper layer and a lower layer which are hierarchized.
(c) Transmitting the information of the second terminal described in tree structure to a predetermined URL to record the information (S03). The URL may be a URL which can be accessed by both the first terminal and the second terminal. For example, the URL may be a site on an intranet or a site on the Internet. When information of the second terminal is previously recorded, of the characteristics of the constructed second terminal, only branch information which must be updated may be updated.
(d) Causing the second terminal to notify the first terminal of a URL related to the information of the second terminal and requesting the first terminal to distribute data adapting to the second terminal (S04). Data to be requested to be distributed may be, e.g., a digital item. The step of data distribution request is called a negotiate step. In this negotiate step, a negotiation message including a URL related to the information of the second terminal described in tree structure is transmitted. The step of distribution request, a negotiation message may be exchanged between the second terminal and the first terminal a plurality of times.
(e) Receiving data from the first terminal (S05).

In addition, the step of constructing the second terminal (S01) will be described below. The step of constructing the second terminal includes the following steps of:
i) constructing the second terminal by selecting a CPU, an OS, a memory, an output, and a VM (virtual machine) with respect to general characteristics;
ii) constructing the second terminal by selecting USB, BlueTooth, wireless802, and a serial or parallel data I/O (data input/output);
iii) constructing the second terminal by selecting a storage medium such as a MultiMedia card (MMC), a Compact Flash (registered trademark), a Secure Disk (SD), a MemoryStick (MS), a hard disk (HD), a DVD, a VCD, a Zip disk, or a flexible disk;
iv) constructing the second terminal by selecting a supporting tool such as a global positioning system (GPS), a Browser, Intellectual Property Management and Protection tools (IPMP tools), an REL (Rights Expression Language Tool), or a meta data tool;
v) constructing the second terminal according to a predetermined AV decoding format;
vi) constructing the second terminal according to predetermined image format supporting;
vii) constructing the second terminal according to predetermined text format supporting;
viii) constructing the second terminal according to predetermined system format supporting;
ix) constructing the second terminal by providing a predetermined audio output for reproducing sound or voice;
x) constructing the second terminal by providing a predetermined video output for displaying a video or an image; and
xi) constructing the second terminal by providing a predetermined text output for displaying a text.
   In addition, the step of constructing the second terminal may include the following steps of:
xii) constructing the second terminal according to a predetermined AV encoding format;
xiii) constructing the second terminal by providing a predetermined audio input for acquiring sound or voice;
xiv) constructing the second terminal by providing a predetermined video input for acquiring a video or an image; and
xv) constructing the second terminal by providing a predetermined text input for inputting a text.

The step of constructing the second terminal according to the predetermined AV decoding format further includes the following steps of:
i) selecting an audio decoding supporting format;
ii) selecting a video decoding supporting format;
iii) determining a bit rate for audio decoding;
iv) determining a bit rate for video decoding;
v) determining the maximum bit rate for audio decoding in coding at a variable bit rate;
vi) determining the maximum bit rate for video coding in coding at a variable bit rate;
vii) determining an average bit rate for audio decoding in coding at a variable bit rate;
viii) determining an average bit rate for video decoding in coding at a variable bit rate; and
ix) determining a limited buffer size for audio or video decoding.

Furthermore, the step of constructing the second terminal according to the predetermined AV encoding format may further include the steps of:
i) selecting an audio encoding supporting format;
ii) selecting a video encoding supporting format;
iii) determining a bit rate for audio encoding;
iv) determining a bit rate for video encoding;
v) determining the maximum bit rate for audio encoding in coding at a variable bit rate;
vi) determining the maximum bit rate for video encoding in coding at a variable bit rate;
vii) determining an average bit rate for audio encoding in coding at a variable bit rate;
viii) determining an average bit rate for video encoding in coding at a variable bit rate; and
ix) determining a limited buffer size for audio or video encoding.

The step of constructing the second terminal according to the predetermined system format may further include the following steps of:
i) selecting MPEG2 system format supporting;
ii) selecting MPEG4 system format supporting;
iii) selecting predetermined file format supporting; and
iv) selecting predetermined communication protocol supporting.

The step of selecting the MPEG2 system format supporting may further include the following steps of:
i) determining MPEG2 transport system (TS) format supporting; and
ii) determining MPEG2 program system (PS) format supporting.

Furthermore, the step of selecting the MPEG4 system format supporting may further include the following steps of:
i) determining format supporting of MPEG4 system part 1;
ii) determining format supporting of MPEG4 system part 11;
iii) determining format supporting of MPEG4 system part 12;
iv) determining format supporting of MPEG4 system part 13;
v) determining format supporting of MPEG4 system part 14;
vi) determining format supporting of MPEG4 system part 15; and
vii) determining format supporting of MPEG4 system part 16.

The step of selecting the predetermined file format supporting may further include the following steps of:
i) determining MP4 file format supporting;
ii) determining QuickTime file format supporting;
iii) determining AVi file format supporting;
iv) determining MP2 file format supporting;
v) determining MP21 file format supporting;
vi) determining ASF file format supporting;
vii) determining another file format used in another area; and
viii) determining a future file format.

Furthermore, the step of selecting the predetermined communication protocol may further include the following steps of:
i) determining RTP protocol supporting:
ii) determining H.323 protocol supporting:
iii) determining SIP protocol supporting:
iv) determining HTTP protocol supporting:
v) determining TCP/IP protocol supporting; and
vi) determining another protocol supporting.

The step of requesting the first terminal to perform data distribution to the second terminal (S04) may include the following steps of:
i) selecting some branch information in tree structure of the information of the second terminal. In a data distribution request, when branch information required for data selection in the first terminal is selected in advance, the data selection in the first terminal can be easily performed; and
ii) transmitting a URL related to the selected branch information to the first terminal. In this step, URLs related to pieces of branch information may be transmitted to the first terminal.

A data distribution method in the first terminal will be described below. The data distribution method is a method of distributing data adapting to the second terminal, i.e., a digital item. The data distribution method, as shown in Fig. 11, includes steps (a) to (d).
(a) Receiving a URL related to information of the second terminal and receiving a distribution request of the data adapting to the second terminal (S11). This step is called a negotiation step. The step of receiving a distribution request, a negotiation message may be exchanged between the first terminal and the second terminal a plurality of times.
(b) Acquiring information of the second terminal described in tree structure (S12). As the information of the second terminal described in tree structure, information related to basic characteristics of the second terminal, information related to AV coding capability of the second terminal, and pieces of information related to a multimedia input/output of the second terminal are branched and described as branch information. The upper layer and the lower layer of the branch information are defined by hierarchization.
(c) Selecting data adapting to the second terminal on the basis of the acquired information (S13). This step will be described later.
(d) Transmitting the selected data to the second terminal (S14).

The step of selecting data adapting to the second terminal on the basis of the information acquired in the first terminal (S13), as shown in Fig. 12, may further include the following steps of:
i) parsing the obtained information of the second terminal described in tree structure (S21). The parsing can be performed by a parser. The parser can be realized by hardware or software; and
ii) selecting data adapting to the second terminal on the basis of branch information described in tree structure and obtained by the parsing (S22). As the branch information, for example, corresponding to the AV coding capability of the second terminal, data which can be played back by the second terminal, for example, a digital item such as contents are selected.

The present invention is established by the following configuration. More specifically, a digital item adaptation system according to another embodiment of the present invention includes the steps of:
constructing a multimedia framework by converting contents to prepare different support terminals having different capabilities;
executing a negotiation protocol to obtain a description of a terminal and constructing a multimedia framework;
constructing a multimedia framework by operating a parser to parse the description of the terminal obtained from a URL designated by a negotiation message obtained through the negotiation protocol;
transmitting a negotiation message to obtain the description of the terminal from the URL;
parsing the obtained description of the terminal;
selecting contents on the basis of a format and capabilities which are adapting to the terminal according to the parsed description of the terminal; and
supplying the selected contents to the terminal.

As described above, the present invention has been described in detail with reference to the preferable embodiments. However, the present invention is not limited to these embodiments. It will be apparent to a person skilled in the art that a large number of preferable changes and modifications can be effected within the technical scope of the present invention described in the scope of claims.

## Claims

1. A data distribution system comprising a first terminal having data and a second terminal, wherein the system distributes data adapting to the second terminal from the first terminal to the second terminal,
wherein the first terminal comprises:
a data recording means that records data of a plurality of formats;
a data distribution request receiving means that receives a distribution request of data adapting to the second terminal and that receives a URL at which information of the second terminal is recorded from the second terminal;
a terminal information acquiring means that acquires the information of the second terminal from the URL:
a data selecting means that selects data adapting to the second terminal on the basis of the acquired information of the second terminal; and
a data transmitting means that transmits the selected data to the second terminal, and
wherein the second terminal comprises:
a terminal information describing means that describes the information of the second terminal in tree structure;
a URL recording means that transmits the information of the second terminal described in tree structure to a predetermined URL to record the information at the URL;
a data distribution request means that requests the first terminal to distribute data adapting to the second terminal and that notifies the first terminal of the URL; and
a data receiving means that receives the data from the first terminal.

2. A first terminal in a data distribution system that distributes data adapting to a second terminal from the first terminal having data to the second terminal, comprising:
a data recording means that records data of a plurality of formats;
a data distribution request receiving means that receives a distribution request of data adapting to the second terminal and that receives a URL at which the information of the second terminal from the second terminal;
a terminal information acquiring means that acquires the information of the second terminal from the URL;
a data selecting means that selects the data adapting to the other terminal on the basis of the acquired information of the second terminal; and
a data transmitting means that transmits the selected data to the second terminal.

3. A second terminal in a data distribution system that distributes data adapting to the second terminal from a first terminal having data to the second terminal, comprising:
a terminal information describing means that describes information of the second terminal in tree structure;
a URL recording means that transmits the information of the second terminal described in tree structure to a predetermined URL and that records the information at the URL;
a data distribution request means that requests the first terminal to distribute data adapting to the second terminal and that notifies the fist terminal of the URL; and
a data receiving means that receives the data from the first terminal.

4. A third terminal that, in a data distribution system that distributes data adapting to a second terminal from a first terminal having data to the second terminal, has a URL which can be accessed by the first and second terminals and records information of the second terminal, comprising:
a terminal information receiving means that tree structure description of information of the first terminal from the second terminal;
a terminal information recording means that records information of the second terminal; and
a terminal information transmission means that transmits the information of the second terminal to the first terminal in response to a distribution request of the information of the second terminal from the first terminal.

5. A data request method in a second terminal in a data distribution system that distributes data adapting to the second terminal from a first terminal having data to the second terminal, comprising the steps of:
constructing the second terminal;
describing information of the second terminal in tree structure;
transmitting the information of the second terminal described in tree structure to a predetermined URL to record the information;
requesting the first terminal to distribute data adapting to the second terminal and notifying the first terminal of the URL from the second terminal; and
receiving data from the first terminal.

6. The data request method according to claim 5, wherein as the information of the second terminal described in tree structure, information related to basic characteristics of the second terminal, information related to AV coding capability of the second terminal, and pieces of information related to a multimedia input/output of the second terminal are branched and described as branch information.

7. The data request method according to claim 5, comprising the steps of:
selecting some branch information in tree structure of the information of the second terminal; and
notifying the first terminal of a URL related to the selected branch information to request the first terminal to distribute data to the second terminal.

8. The data request method according to claim 5, comprising the steps of:
constructing the second terminal by selecting a CPU, an OS, a memory, an output, and a VM (virtual machine) with respect to general characteristics;
constructing the second terminal by selecting USB, BlueTooth, wireless802, and a serial or parallel data I/O (data input/output);
constructing the second terminal by selecting a storage medium such as a MultiMedia card (MMC), a Compact Flash (registered trademark), a Secure Disk (SD), a MemoryStick (MS), a hard disk (HD), a DVD, a VCD, a Zip disk, or a flexible disk;
constructing the second terminal by selecting a supporting tool such as a global positioning system (GPS), a Browser, Intellectual Property Management and Protection tools (IPMP tools), an RELtool (Rights Expression Language Tool), or a meta data tool;
constructing the second terminal according to a predetermined AV decoding format;
constructing the second terminal according to a predetermined image format supporting;
constructing the second terminal according to a predetermined text format supporting;
constructing the second terminal according to a predetermined system format supporting;
constructing the second terminal by providing a predetermined audio output for reproducing sound or voice;
constructing the second terminal by providing a predetermined video output for displaying a video or an image; and
constructing the second terminal by providing a predetermined text output for displaying a text.

9. The data request method according to claim 8, wherein the method of constructing the second terminal further includes the steps of:
constructing the second terminal according to a predetermined AV encoding format;
constructing the second terminal by providing a predetermined audio input for acquiring sound or voice;
constructing the second terminal by providing a predetermined video input for acquiring a video or an image; and
constructing the second terminal by providing a predetermined text input for inputting a text.

10. The data request method according to claim 8, wherein the step of constructing the second terminal according to the predetermined AV decoding format further includes the steps of:
selecting an audio decoding supporting format;
selecting a video decoding supporting format;
determining a bit rate for audio decoding;
determining a bit rate for video decoding;
determining the maximum bit rate for audio decoding in coding at a variable bit rate;
determining the maximum bit rate for video coding in coding at a variable bit rate;
determining an average bit rate for audio decoding in coding at a variable bit rate;
determining an average bit rate for video decoding in coding at a variable bit rate; and
determining a limited buffer size for audio or video decoding:

11. The data request method according to claim 9, wherein the step of constructing the second terminal according to the predetermined AV encoding format further includes the steps of:
selecting an audio encoding supporting format;
selecting a video encoding supporting format;
determining a bit rate for audio encoding;
determining a bit rate for video encoding;
determining the maximum bit rate for audio encoding in coding at a variable bit rate;
determining the maximum bit rate for video encoding in coding at a variable bit rate;
determining an average bit rate for audio encoding in coding at a variable bit rate;
determining an average bit rate for video encoding in coding at a variable bit rate; and
determining a limited buffer size for audio or video encoding.

12. The data request method according to claim 8, wherein the step of constructing the second terminal according to the predetermined system format further includes the steps of:
selecting MPEG2 system format supporting;
selecting MPEG4 system format supporting;
selecting predetermined file format supporting; and
selecting predetermined communication protocol supporting.

13. The data request method according to claim 8, wherein the step of selecting the MPEG2 system format supporting further includes the steps of:
determining MPEG2 transport system (TS) format supporting; and
determining MPEG2 program system (PS) format supporting.

14. The data request method according to claim 12, wherein the step of selecting the MPEG4 system format supporting further includes the steps of:
determining format supporting of MPEG4 system part 1;
determining format supporting of MPEG4 system part 11;
determining format supporting of MPEG4 system part 12;
determining format supporting of MPEG4 system part 13;
determining format supporting of MPEG4 system part 14;
determining format supporting of MPEG4 system part 15; and
determining format supporting of MPEG4 system part 16.

15. The data request method according to claim 12, wherein the step of selecting the predetermined file format supporting further includes the steps of:
determining MP4 file format supporting;
determining QuickTime file format supporting;
determining AVi file format supporting;
determining MP2 file format supporting;
determining MP21 file format supporting;
determining ASF file format supporting;
determining another file format used in another area; and
determining a future file format.

16. The data request method according to claim 12, wherein the step of selecting the predetermined communication protocol further includes the steps of:
determining RTP protocol supporting:
determining H.323 protocol supporting:
determining SIP protocol supporting:
determining HTTP protocol supporting:
determining TCP/IP protocol supporting; and
determining another protocol supporting.

17. A data distribution method in a first terminal in a data distribution system that distributes data adapting to a second terminal from a first terminal having data to the second terminal, comprising the steps of:
receiving a distribution request of data adapting to the second terminal from the second terminal and receiving a URL related to information of the second terminal;
acquiring information of the second terminal described in tree structure from the URL;
selecting data adapting to the second terminal on the basis of the acquired information; and
transmitting the selected data to the second terminal.

18. The data distribution method according to claim 17, wherein as the information of the second terminal described in tree structure, information related to basic characteristics of the second terminal, information related to AV coding capability of the second terminal, and pieces of information related to a multimedia input/output of the second terminal are branched and described as branch information.

19. The data distribution method according to claim 17, wherein the step of selecting data adapting to the second terminal on the basis of the acquired information in the first terminal includes the steps of:
parsing the information of the second terminal described in tree structure and obtained from the URL;
selecting data adapting to the second terminal on the basis of branch information described in tree structure and obtained by the parsing.
